# EUROPEAN PATENT APPLICATION

(11) **EP 1 990 720 A1**
(43) Date of publication of application: **12.11.2008**
(21) Application number: 07254590.8
(22) Date of filing: 27.11.2007
(51) Int. Cl.: G06F 11/14, G06F 3/06

(54) **Methods and apparatus to backup and restore data for virtualized storage area**

(30) Priority: 08.05.2007 US 746028
(71) Applicant: Hitachi, Ltd., Chiyoda-ku Tokyo (JP)
(72) Inventor: Arakawa, Hiroshi, Tokyo 100-8220 (JP); Kaneda, Yasunori, Chiyoda-ku Tokyo 100-8220 (JP); Yamamoto, Akira, Chiyoda-ku Tokyo 100-8220 (JP)
(74) Representative: Hodsdon, Stephen James

(57) **Abstract**

Information about management of virtualization (i.e. mapping between physical area/data/objects and logical area / data / objects) is provided by a storage system (100) to a backup appliance (700) (or common computer) that performs backup and restore of data. The backup appliance uses the information to recognize the mapping and to perform backup and restore process based on the mapping. Therefore the backup appliance handles only physical (really existing) area/data/objects to perform backup and restore rather than virtual ones. This realizes reducing the amount of data to be transferred and backed up, thus the problems mentioned above are solved.

## Description

### BACKGROUND

This invention relates to method and apparatus enabling backup and restoring of data for virtualized storage area. In particular, the invention provides method and apparatus that conserve storage resources and transmission bandwidth.

Various systems and methods are used in the art for data storage, backup, and restore. Recently, use of virtualization techniques have been popularized for storage systems. These techniques can reduce storage area and management cost. These techniques include:
● Thin provisioning: A storage system provides virtual volumes as storage area to store data for computers. The storage system allocates and assigns physical area to only location having write access of the computers. Consequently, the total amount of used physical area in the pool can be smaller than total amount of virtual area shown to the computers.
● Deduplication: When a storage system receives from a computer an object (data, file, etc.) to be stored, the storage system compares it with objects that have already been stored in the storage system. If an object having the same contents is detected, the storage system creates a link to the detected object instead of storing the new object. In other words, the storage system stores the new (same) object virtually, but does not store it physically.
● Snapshot by Copy on Write: At the time a snapshot of storage area is taken, the storage system does not copy the data. When a write access is performed to the area, the storage system copies the data to another area for snapshot data, before the write operation (i.e. old data for the access). Then the storage system writes the new data to the original area. By maintaining and managing the old data, the storage system can provide the snapshot of the original area to computers virtually.
With these techniques, the amount of used physical area in the storage system can be smaller than the amount of logical area used by computers. In other words, the physical area is used efficiently by using these techniques.

However, regarding backup and restoring of data, especially in backup and restoring for volumes, data in the whole logical area is backed up and restored because the backup server handles the logical (virtual) area provided by the storage system. This causes performance problem of backup process and restore process because the amount of transferred data in these processes may be extremely large. This also requires large cost for transfer line, because large bandwidth has to be prepared in these processes. Moreover, large capacity and number of backup media is needed. That is, regarding backup and restoring of data, the efficiency mentioned above is lost.

Further information regarding these prior art techniques can be found in:
● US Patent Publication US2004/0162958A1 to Kano discloses thin provisioning
● US Patent 7,065,619 to Zhu discloses lO operation under deduplication operation.
● DataDomain(http://www.datadomain.com/products/arrays.html) has already released deduplication hardware and software.
● Microsoft's Windows Storage Server 2003 R2 has single instance capability (http://download.microsoft.com/download/8/3/b/83bf26f3-40bd-434a-a389-fbe39f9d726f/INF323.ppt).
● US Patent 5,649,152 to Ohran discloses snapshot facility by copy on write.
The entire content of which is incorporated herein by reference.

The following summary of the invention is provided in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

Various aspects of the invention provide methods to preferably solve the above problems in backup and restore process with the virtualization techniques. According to aspects of the invention, Information about management of virtualization (i.e. mapping between physical area/data/objects and logical area/data/objects) is provided by a storage system to a backup appliance (or common computer) that performs backup and restore of data. The backup appliance uses the information to recognize the mapping and to perform backup and restore process based on the mapping. Therefore the backup appliance handles only physical (really existing) area/data/objects to perform backup and restore rather than virtual ones. This realizes reducing the amount of data to be transferred and backed up; thus the problems mentioned above are solved.

According to embodiments of the invention, a storage system provides thin provisioned volumes (TPV) to host computers, and provides mapping information about thin provisioning to a backup appliance. The backup appliance performs backup and restore of data stored in the TPV according to the mapping information. In order to do this, the backup appliance also communicates with the storage system.

According to other embodiment, a storage system has deduplication capability and provides link information about data stored virtually to a backup appliance. The backup appliance performs backup and restore of data by using the link information with communication to the storage system.

According to yet another embodiment, a storage system provides snapshot by copy on write. That is, the storage system provides snapshot image of multiple generation (point in time) by maintaining differential data between each snapshot (i.e. old data and other data). The storage system provides mapping information between each snapshot and these data to a backup appliance. The backup appliance performs backup and restore of data by using the mapping information with communication to the storage system. Thus, the backup and restoring of a set of snapshots can be realized without transferring whole data in virtual volumes of the snapshots. That is, it can be realized by transferring just differential data.

The accompanying drawings, which are incorporated in and constitute a part of this specification, exemplify the embodiments of the present invention and, together with the description, serve to explain and illustrate principles of the invention. The drawings are intended to illustrate major features of the exemplary embodiments in a diagrammatic manner. The drawings are not intended to depict every feature of actual embodiments nor relative dimensions of the depicted elements, and are not drawn to scale.
Figure 1 schematically illustrates the system configuration of the 1^{st} embodiment.
Figure 2 illustrates an overview of usage of volumes in the Storage system 100.
Figure 3 illustrates structure and method to provide TPV according to an embodiment of the invention.
Figure 4 is an example of Mapping information 201 according to an embodiment of the invention.
Figure 5 shows an example of Pool information 202 according to an embodiment of the invention.
Figure 6 illustrates backup status information according to an embodiment of the invention.
Figure 7 illustrates a form of mapping information to be sent according to an embodiment of the invention.
Figure 8 shows a Backup process according to an embodiment of the invention.
Figure 9 shows a write process for TPV 610 according to an embodiment of the invention.
Figure 10 shows a Restore process according to an embodiment of the invention.
Figure 11 illustrates an overview of usage of volumes in the storage system according to an embodiment of the invention.
Figure 12 illustrates a form of mapping information to be sent according to an embodiment of the invention.
Figure 13 shows an example of format for preparing the Mapping information on the data transfer volume according to an embodiment of the invention.
Figure 14 shows an example of format for preparing the data on the Data transfer volume according to an embodiment of the invention.
Figure 15 shows a backup process according to an embodiment of the invention.
Figure 16 shows a restore process according to an embodiment of the invention.
Figure 17 illustrates system configuration according to another embodiment of the invention.
Figure 18 illustrates an overview of usage of volumes in the storage system according to another embodiment of the invention.
Figure 19 shows a concept of deduplication according to another embodiment of the invention.
Figure 20 shows an example of Link information according to an embodiment of the invention.
Figure 21 describes a write process with deduplication according to an embodiment of the invention.
Figure 22 shows a backup process according to an embodiment of the invention.
Figure 23 shows a restore process according to an embodiment of the invention.
Figure 24 illustrates the system configuration according to yet another embodiment of the invention.
Figure 25 depicts an overview of snapshot by copy on write according to an embodiment of the invention.
Figure 26 illustrates and example of Backup appliance accesses to Pool volume and Data Transfer volume via SAN.
Figure 27 shows an example of Snapshot information according to an embodiment of the invention.
Figure 28 shows an example of Old data information according to an embodiment of the invention.
Figure 29 shows an example of Pool information according to an embodiment of the invention.
Figure 30 shows an example of Base data information according to an embodiment of the invention.
Figure 31 describes a write process according to an embodiment of the invention.
Figure 32 shows a backup process for multiple generations of snapshot according to an embodiment of the invention.
Figure 33 shows a restore process for one snapshot according to an embodiment of the invention.
Figure 34 shows a restore process for multiple generations of snapshot according to an embodiment of the invention.
Figure 35 illustrates a format for writing snapshot information, old data information and the Base data information according to an embodiment of the invention.

The following is a detailed description of several embodiments according to the invention. A common thread of these embodiments is that they enable saving on storage space for backup. Additionally, they relax the requirements for bandwidth of the communication channel for the backup and restore operations. This is achieved by managing the data that is backed up and the timing of the back up operation. As a result, the cost of both storage system and communication lines can be reduced.

### A. 1^{st} Embodiment

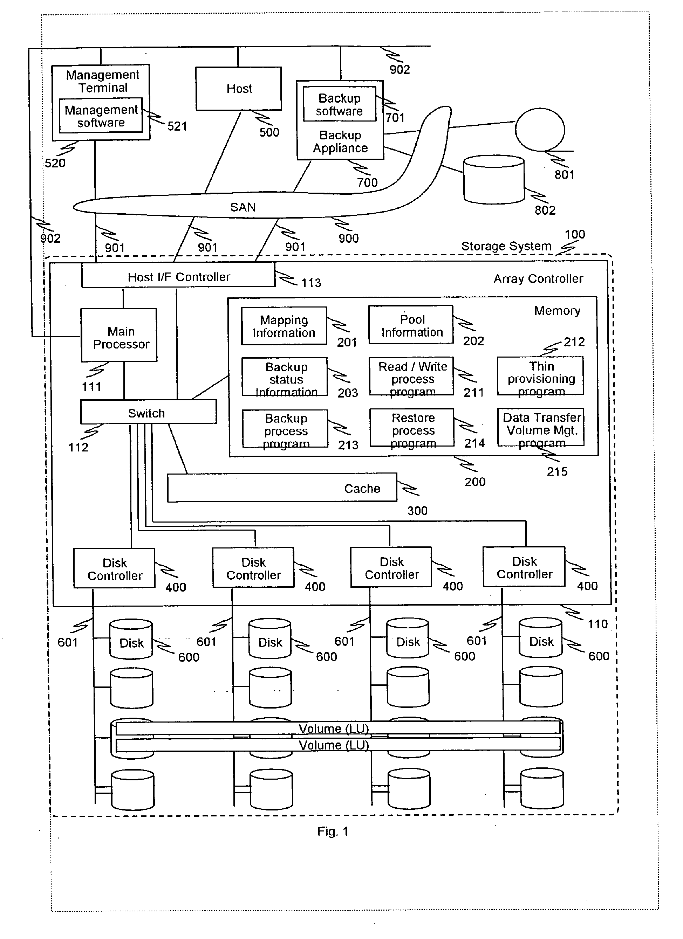

### A.1. System Configuration - Explanation of Figure 1

Figure 1 schematically illustrates the system configuration of the 1^{st} embodiment. A storage system that is related to this invention consists of following components.
100: Storage system
110: Array controller
111: Main processor
112: Switch
113: Host interface
200: Memory
300: Cache
400: Disk controller
600: Disk (e.g. HDD)
601: Backend path (e.g. Fibre Channel, SATA, SAS, iSCSI(IP))

These elements and their interconnectivity are conventional in the art and, therefore, detailed description of them is omitted. However, the operation, function and interaction of these elements according to various embodiment of the invention are improved, as described below. Main processor 101 performs various processes regarding Array controller 100. Main processor 101 and other components use following information stored in Memory 200:
201: Mapping information
202: Pool information
203: Backup status Information

Main processor 101 performs the processes by executing following programs stored in Memory 200. The details of these processes are described later.
211: Read / Write process program
212: Thin provisioning program
213: Backup process program
214: Restore process program
215: Data Transfer Volume management program

Host computer 500, Management terminal 520 and Backup appliance 700 are connected to Host interface 113 via SAN 901 (e.g. Fibre Channel, iSCSI(IP)). Host 500, Management terminal 520, Backup appliance 700 and Array controller 110 are connected each other via out-of-band Network 902 (e.g. IP). Volumes (Logical Units) provided by storage system 100 are produced from collection of areas in HDDs. They may be protected by storing parity code (i.e. by RAID configuration).

Management terminal 520 is a computer, e.g., specially-program multi purpose PC, and has resources (e.g. processor, memory, storage device and so on) to perform several management tasks by executing Management software 521. Management terminal can instruct to set the configuration about volumes (logical unit) and other resources via SAN 901 or Network 902. Backup appliance 700 is also a computer, e.g., specially-program multi purpose PC, and has resources (e.g. processor, memory, storage device and so on) to perform backup and restore process by executing Backup software 701. The details of these processes are described later. Backup appliance 700 has Backup media 801 (e.g. Tape) and Backup media 802 (e.g. HDD).

### A.2. Overview of usage of volumes

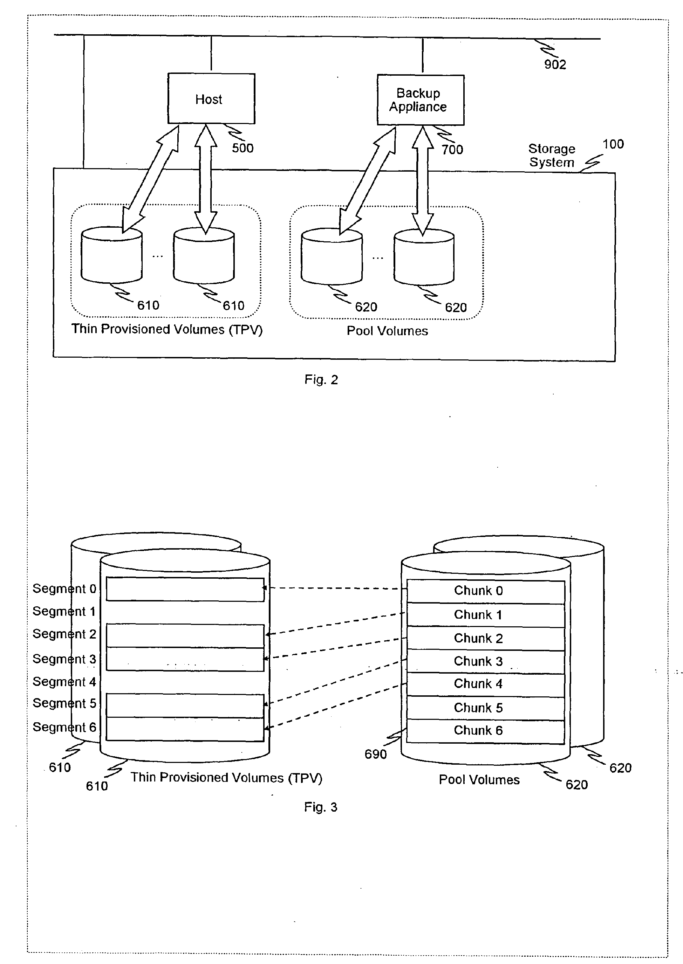

Figure 2 illustrates an overview of usage of volumes in the Storage system 100. The Storage system 100 provides Thin Provisioned Volumes (TPV) 610 as storage area for Host 500. Host 500 performs read and write access to store and use data in the TPV 610 via SAN 901.

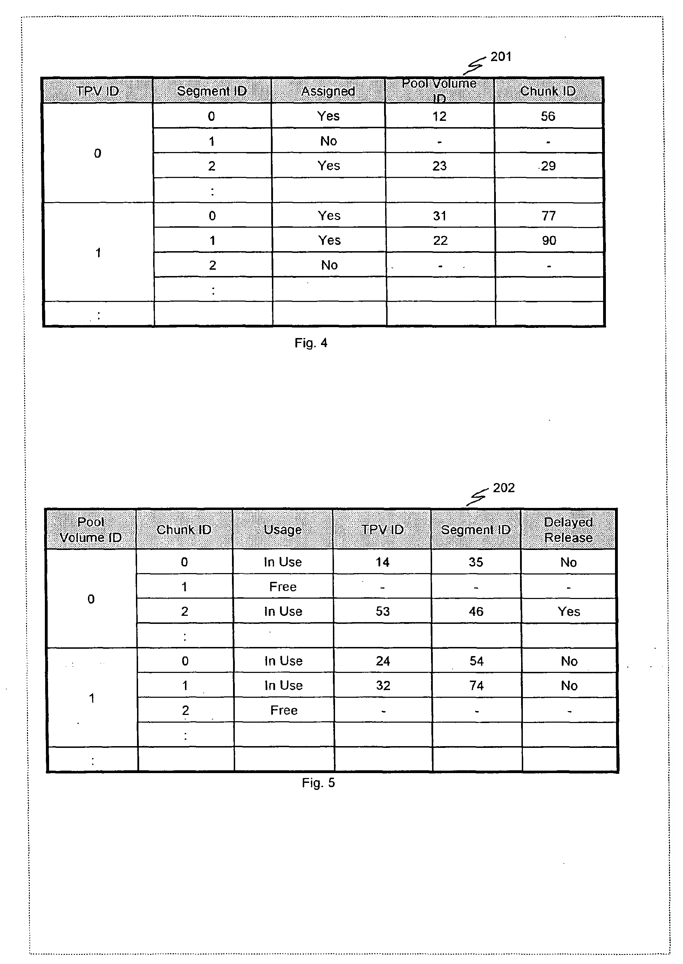

Figure 3 illustrates structure and method to provide TPV according to an embodiment of the invention. The Storage system 100 has Pool volumes 620 and divides Pool volumes 620 into a number of fixed-length areas (i.e. Chunks 690). The Storage system 100 assigns a chunk 690 to a segment of a virtual volume (TPV) on write access. In other words, physical storage area is assigned on demand. In figure 3, a TPV 620 is constituted by multiple segments virtually, and a chunk 690 is allocated from Pool volume 620 and assigned to a segment (i.e. a fixed length area of TPV). For example, Chunk 4 is assigned to Segment 6 in this figure. To achieve this, Array controller 110 uses Mapping information 201 and Pool information 202. Figure 4 is an example of Mapping information 201 according to an embodiment of the invention. This information maintains mapping between chunks and segments of each volume. Status of assignation is 'No' if no chunk is assigned to the segment. This information can be constructed as list or directory of each element for faster search.

Figure 5 shows an example of Pool information 202 according to an embodiment of the invention. This information manages whether a chunk is used or not. By using this information, Array controller 110 is able to find free (unused) chunks in write process described below. This information also can be constructed as list or directory of each element to search a free chunk quickly.

As shown in Figure 2, the Backup Appliance 700 can access Pool volume via SAN 910 to perform backup and restore process as described below.

### A.3. Backup process

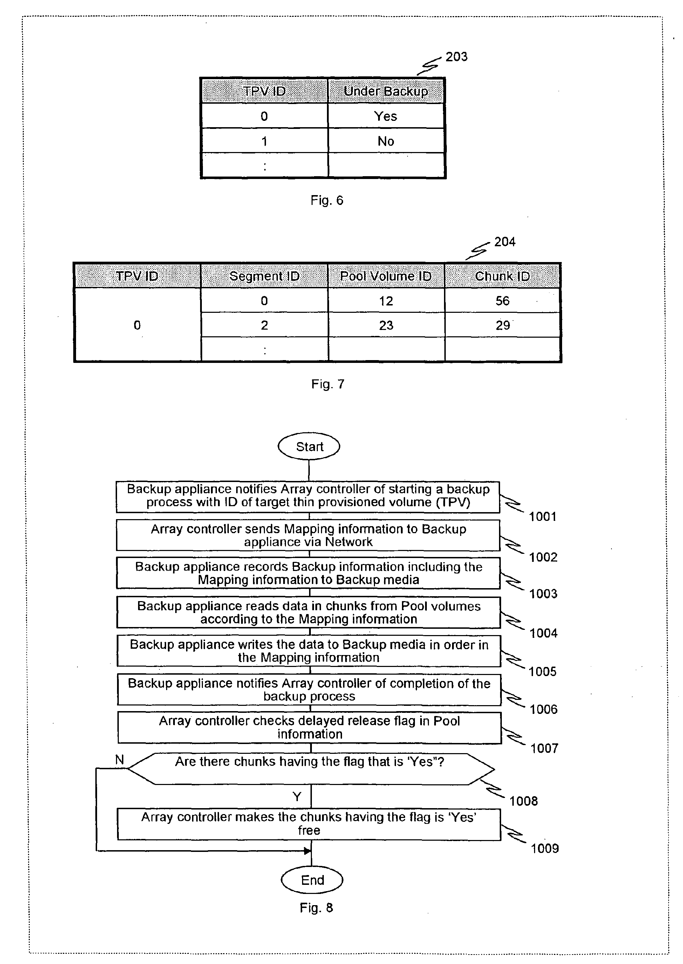

Figure 8 shows a Backup process according to an embodiment of the invention.
➢ At step 1001, the Backup appliance 700 notifies the Array controller 110 of staring a backup process via the Network 902 or the SAN 901. In this notification, the Array controller 110 indicates ID of TPV 610 as backup target. In responding to the notification, the Array controller 110 updates the Backup status information 203 shown in Figure 6 (i.e. "Under backup flag" is changed to 'Yes').
➢ At step 1002, the Array controller 110 sends Mapping information about the target TPV 610 to the Backup appliance 700 via the Network 902. This Mapping information to be sent may have a form shown in Figure 7. The information 204 shown in Figure 7 is generated from the original Mapping information 201 by omitting non-assigned part.
➢ At step 1003, the Backup appliance 700 records the backup information including the Mapping information 204 to Backup media 801 or 802.
➢ At step 1004, the Backup appliance 700 reads data in chunks 690 from Pool volumes 620 according to the Mapping information 204.
➢ At step 1005, the Backup appliance 700 writes the data to the Backup media 801 or 802 in order in the Mapping information 204.
➢ At step 1006, the Backup appliance 700 notifies the Array controller 110 of completion of the Backup process. In responding to the notification, the Array controller 110 updates the Backup status information 203 (i.e. "Under backup flag" is changed to 'No').
➢ At step 1007 and step 1008, the Array controller 110 checks "delayed release flag" in Pool information 202. The initial value of the flag is 'No' and it may be changed to 'Yes' in write process described later. If there is any chunk having the flag that is 'Yes', the process proceeds to step 1009. If not, the process ends.
➢ At step 1009, the Array controller 110 makes the chunks having the flag that is 'Yes' free. By this release of the chunks, the Pool information 202 and the Mapping information 201 about the chunks are updated (initialized).

In the above backup process, just data existing in real (not virtual) are processed, transferred and recorded as backup data.

### A.4. Write process for TPV

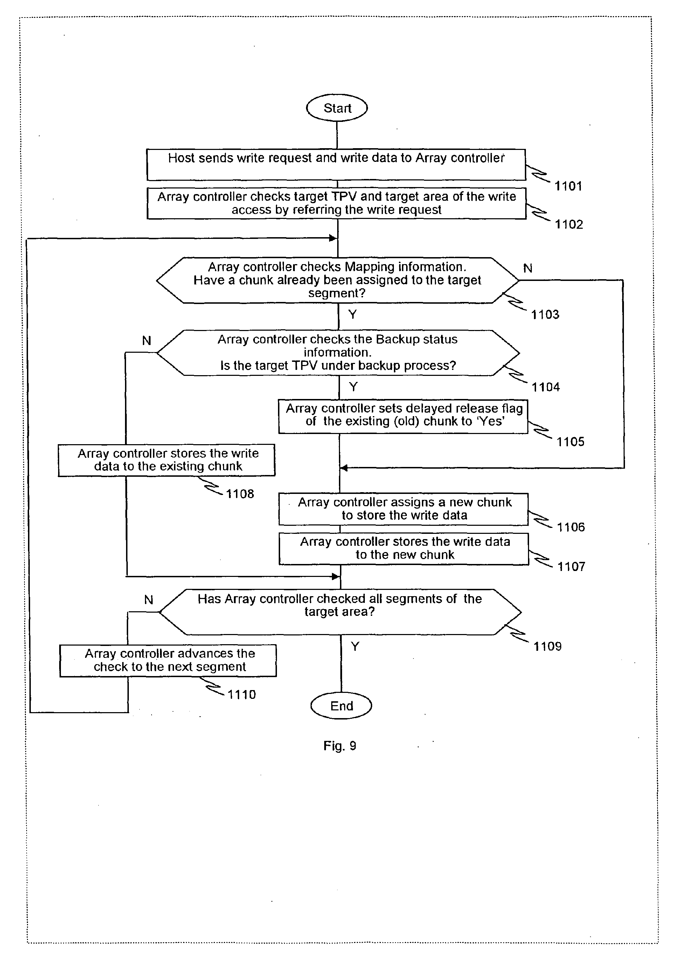

Figure 9 shows a write process for TPV 610 according to an embodiment of the invention.
➢ At step 1101, the Host 500 issues a write request and transfers write data to the Array controller 110.
➢ At step 1102, the Array controller 110 checks target TPV 610 and target area of the write access by referring the write request.
➢ At step 1103, the Array controller 110 checks the Mapping information 201 for a segment in the target area. If a chunk has already been assigned to the segment, the process proceeds to step 1104. If not, the process proceeds to step 1106.
➢ At step 1104, the Array controller 110 checks the Backup status information 203. If the target TPV 610 is under backup, the process proceeds to step 1105. If not, the process proceeds to step 1108.
➢ At step 1105, the Array controller 110 sets "delayed release flag" of the existing (old) chunk to 'Yes'. This flag is maintained in the Pool information 202.
➢ At step 1106, the Array controller 110 assigns a new chunk to store the write data. To do this, the Array controller 110 updates the Mapping information 201 and the Pool information 202.
➢ At step 1107, the Array controller 110 stores the write data to the new chunk.
➢ At step 1108, the Array controller 110 stores the write data to the existing chunk.
➢ At step 1109, if the Array controller 110 has checked all segments of the target area, the process ends. If not, the Array controller 110 advances the check to the next segment (step 1110).

By the above write process, even if write accesses occur during the backup process, the old data (i.e. data before the write access) can be backuped because the old data are kept during the backup process.

### A.5. Read process for TPV

In responding a read request from the Host 500, by referring the Mapping information 201 and the Pool information 202, the Array controller 110 finds the chunk having (new) data to be read and sends the data to the Host 500. If no chunk having the delayed release flag that is 'No' (i.e. having new data) is assigned to the area specified by the read request, the Array controller 110 sends data of zero (0) to the Host 500.

### A.6. Restore process

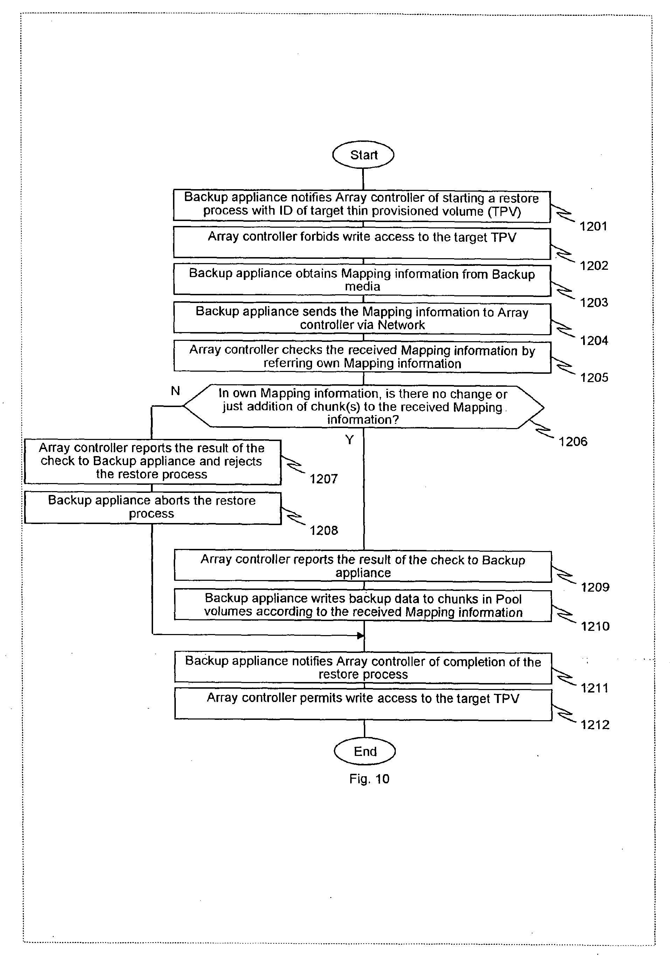

Figure 10 shows a Restore process according to an embodiment of the invention.
➢ At step 1201, the Backup appliance 700 notifies the Array controller 110 of staring a restore process via the Network 902 or the SAN 901. In this notification, the Array controller 110 indicates ID of TPV 610 as restore target.
➢ At step 1202, the Array controller 110 forbids write access to the target TPV 610. That is, the Array controller 110 starts to reject write access to the target TPV 610.
➢ At step 1203, the Backup appliance 700 obtains the Mapping information 204 from the Backup media 801 or 802.
➢ At step 1204, the Backup appliance 700 sends the Mapping information 204 to the Array controller 110 via Network 902.
➢ At step 1205 and step 1206, the Array controller 110 checks the received Mapping information 204 by referring to its own Mapping information 201. If its own Mapping information 205 has no change or just addition of chunk(s) to the received Mapping information 204, the process proceeds to step 1209. If not, the process proceeds to step 1207.
➢ At step 1207, the Array controller 110 reports the result of the check to Backup appliance 110 and rejects the restore process.
➢ At step 1208, the Backup appliance 700 aborts the restore process.
➢ At step 1209, the Array controller 110 reports the result of the check to the Backup appliance 700.
➢ At step 1210, the Backup appliance 700 writes backup data to chunks in the Pool volumes 620 according to the received Mapping information 204.
➢ At step 1211, the Backup appliance 700 notifies the Array controller 110 of completion of the restore process.
➢ At step 1212, the Array controller 110 permits write access to the target TPV 610.

In the above restore process, just data existing in real (not virtual) are processed and transferred.

### B. 2^{nd} Embodiment

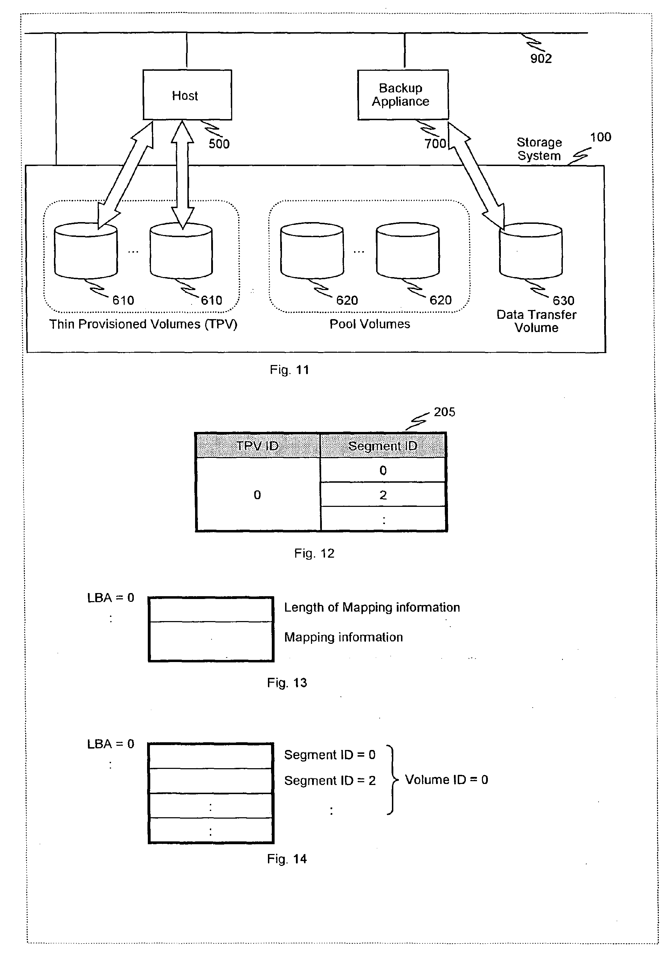

Figure 11 shows overview of usage of volumes in the Storage system 100 in this embodiment. As the difference from the 1^{st} embodiment, the Storage system 100 has a Data transfer volume 630. The Data transfer volume 630 is a special volume to transfer data to/from the Backup appliance 700. The Backup appliance 700 can access the Data transfer volume 630 and can send some data by writing the data to the Data transfer volume 630. The Backup appliance 700 also can get prepared data by reading the data from the Data transfer volume 630. The Data transfer volume 630 can be a virtual volume. The system configuration is the same as the configuration of the 1^{st} embodiment shown in figure 1. The processes for write access and read access for TPV 610 are same the processes described in the 1^{st} embodiment.

### B.1. Backup process

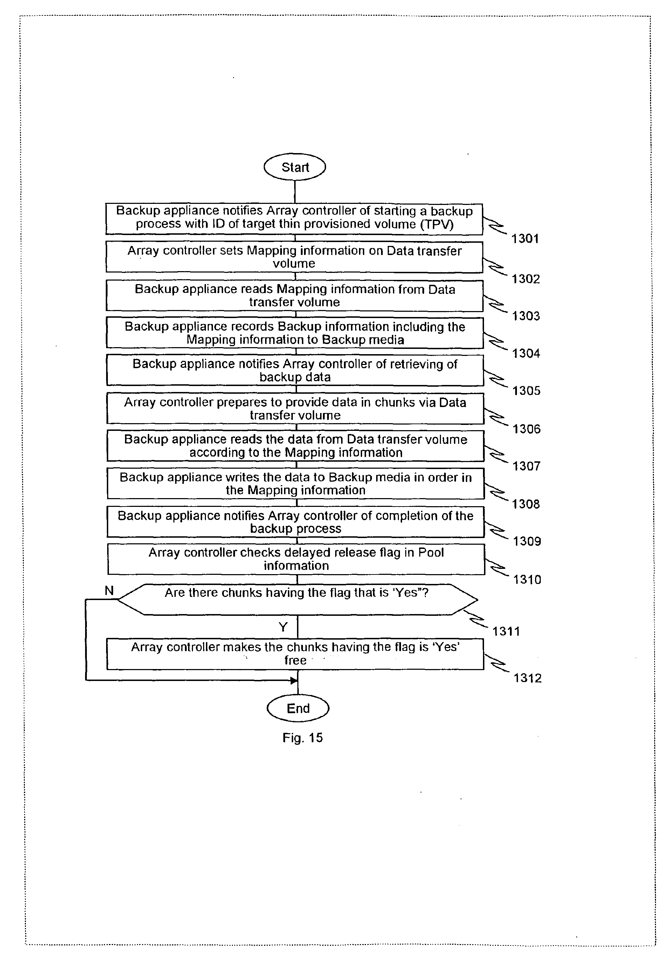

Figure 15 shows a Backup process in this embodiment.
➢ At step 1301, the Backup appliance 700 notifies the Array controller 110 of staring a backup process via the Network 902 or the SAN 901. In this notification, the Array controller 110 indicates ID of TPV 610 as backup target. In responding to the notification, the Array controller 110 updates the Backup status information 203.
➢ At step 1302, the Array controller 110 sets the Mapping information about the target TPV 610 on Data transfer volume 630. This Mapping information to be sent may have a form shown in Figure 12. The information 205 shown in Figure 12 is generated from the original Mapping information 201 by omitting non-assigned part and column regarding absolute location in Pool volumes 620.
   Figure 13 shows an example of format for preparing the Mapping information 205 on the Data transfer volume 630. The first fixed-length part from logical block address (LBA) = 0 contains the length of the Mapping information 205. The Mapping Information 205 follows it.
➢ At step 1303, the Backup appliance 700 reads the Mapping information 205 from Data transfer volume 630. By using the above format, the Backup appliance 700 can read and know the length of the Mapping information 205 so that the Backup appliance 700 can obtain the Mapping information by reading the Data transfer volume 630.
➢ At step 1304, the Backup appliance 700 records the backup information including the Mapping information 205 to Backup media 801 or 802.
➢ At step 1305, the Backup appliance 700 notifies the Array controller 110 of retrieving of backup data.
➢ At step 1306, in responding the notification, the Array controller 110 prepares to provide data in chunks via Data transfer volume 630. Figure 14 shows an example of format for preparing the data on the Data transfer volume 630. In this format, the data are arranged in order in the Mapping information 205.
➢ At step 1307, the Backup appliance 700 reads the data from Data transfer volume 630 according to the Mapping information 205.
➢ At step 1308, the Backup appliance 700 writes the data to the Backup media 801 or 802 in order in the Mapping information 205.
➢ At step 1309, the Backup appliance 700 notifies the Array controller 110 of completion of the Backup process. In responding to the notification, the Array controller 110 updates the Backup status information 203.
➢ At step 1310 and step 1311, the Array controller 110 checks "delayed release flag" in Pool information 202. If there is any chunk having the flag that is 'Yes', the process proceeds to step 1312. If not, the process ends.
➢ At step 1312, the Array controller 110 makes the chunks having the flag that is 'Yes' free. By this release of the chunks, the Pool information 202 and the Mapping information 201 about the chunks are updated (initialized).

In the above backup process, just data existing in real (not virtual) are processed, transferred and recorded as backup data. By the above backup process, data in one TPV can be restored to any (other) TPV because the Mapping information 201 is recreated.

### B.2. Restore process

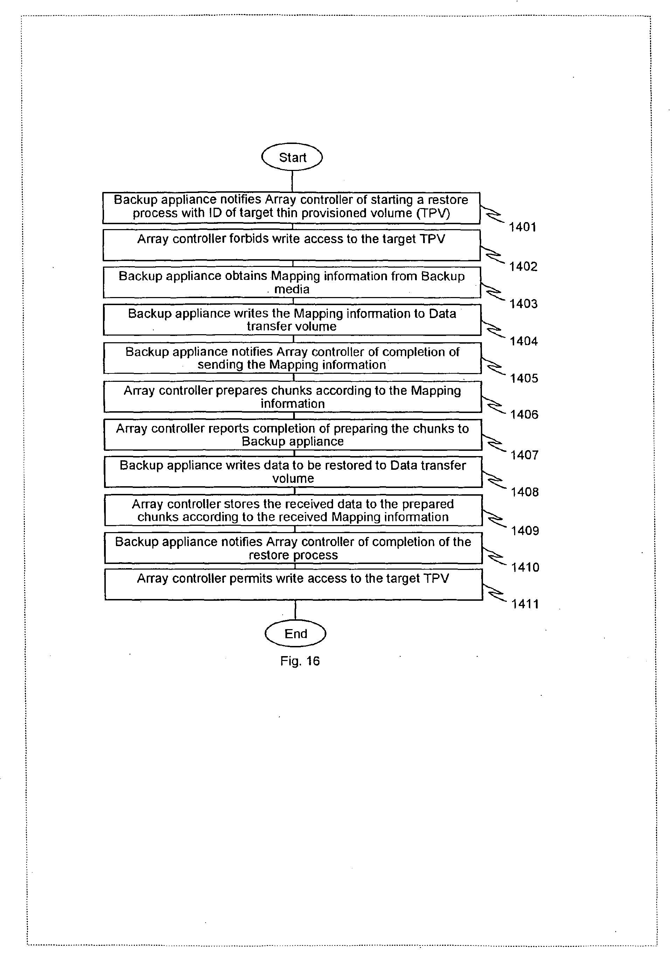

Figure 16 shows a Restore process in this embodiment.
➢ At step 1401, the Backup appliance 700 notifies the Array controller 110 of staring a restore process via the Network 902 or the SAN 901. In this notification, the Array controller 110 indicates ID of TPV 610 as restore target.
➢ At step 1402, the Array controller 110 forbids write access to the target TPV 610. That is, the Array controller 110 starts to reject write access to the target TPV 610.
➢ At step 1403, the Backup appliance 700 obtains the Mapping information 205 from the Backup media 801 or 802.
➢ At step 1404, the Backup appliance writes the Mapping information 205 to the Data transfer volume 630 with the format shown in Figure 13.
➢ At step 1405, the Backup appliance notifies the Array controller 110 of completion of sending the Mapping information 205.
➢ At step 1406, the Array controller 110 prepares chunks according to the Mapping information 205. In this preparation, the Array controller 110 updates the Mapping information 201 and the Pool information 202.
➢ At step 1407, the Array controller 110 reports completion of preparing the chunks to the Backup appliance 700.
➢ At step 1408, the Backup appliance 700 obtains the data to be restored from the Backup media 801 or 802, and writes the data to the Data transfer volume 630 in the format shown in Figure 14, in order in the Mapping information 205.
➢ At step 1409, the Array controller 110 stores the received data in the prepared chunks according to the received Mapping information 205.
➢ At step 1410, the Backup appliance 700 notifies the Array controller 110 of completion of the restore process.
➢ At step 1411, the Array controller 110 permits write access to the target TPV 610.

In the above restore process, just data existing in real (not virtual) are processed and transferred.

### C. 3^{rd} Embodiment

### C.1. System Configuration

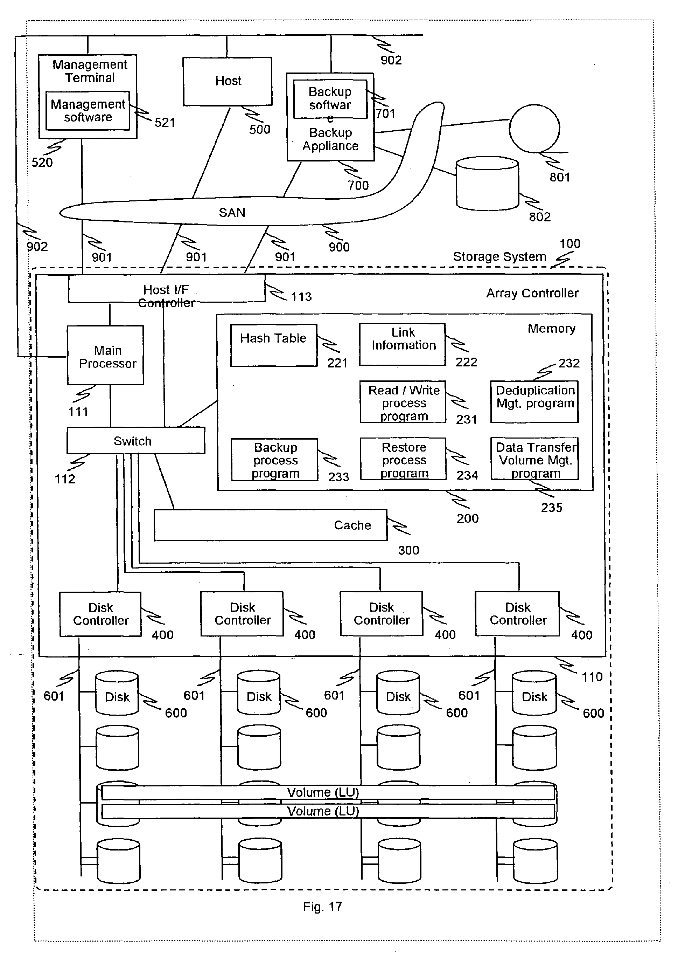

Figure 17 describes the system configuration of the 3^{rd} embodiment. Except for contents of the Memory 200, the system configuration is same as the configuration described in the 1^{st} embodiment. In this embodiment, the following information and programs are stored in Memory 200. Main processor 101 and other components use these information and program to perform various processes described later.
221: Hash table
222: Link information
231: Read / Write process program
232: Deduplication program
233: Backup process program
234: Restore process program
235: Data Transfer Volume management program

### C.2. Overview of usage of volumes

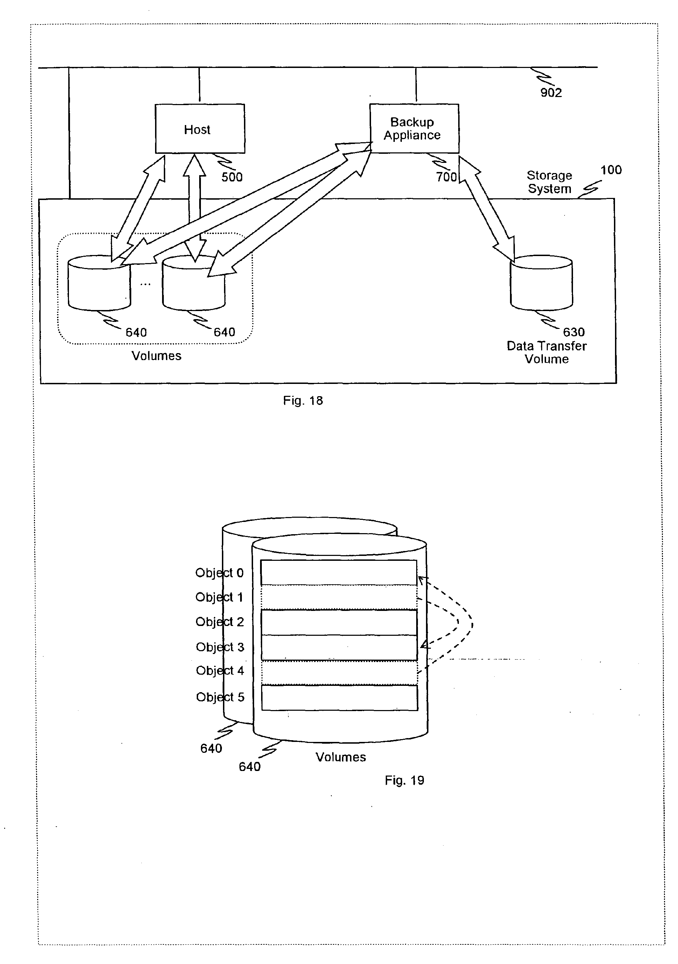

Figure 18 shows overview of usage of volumes in the Storage system 100. The Storage system 100 provides Volumes 640 (i.e. storage area) for Host 500. Host 500 performs read and write access to store and use data (or objects like files) in the Volumes 640 via host paths (e.g. SAN 901). When data or objects are stored in the Volumes 640, the Storage system 100 performs deduplication for contents of the Volume 640. Figure 19 shows a concept of deduplication. When the Storage system 100 receives an object (file or data) to be stored from Host computer 500, the Storage system100 compares it with objects that have already been stored in the Storage system 100. If an object having same contents is detected, the Storage system 100 makes link to the detected object instead of storing the new object. In other words, the Storage system 100 stores the new same object virtually but does not store it physically. For example, Object 4 is not stored physically because it is same as object 0, but a link to Object 0 is stored instead of Object 4 itself in figure 19. The detailed process is described below.

To detect same object, a hash value of each object is used. The hash value is semi-unique value for each object, and the size of the value is smaller than the size of object itself.

Therefore, hash value is easy to compare and suitable to use for detecting the same object. The hash value is generated by hash function such as SHA-1 and MD5. In order to achieve deduplication, the Array controller uses Hash table 221 and Link information 222. The Hash table 221 maintains hash value of each object in the Volumes 640. This information also can be constructed as list or directory of each element to search same value.

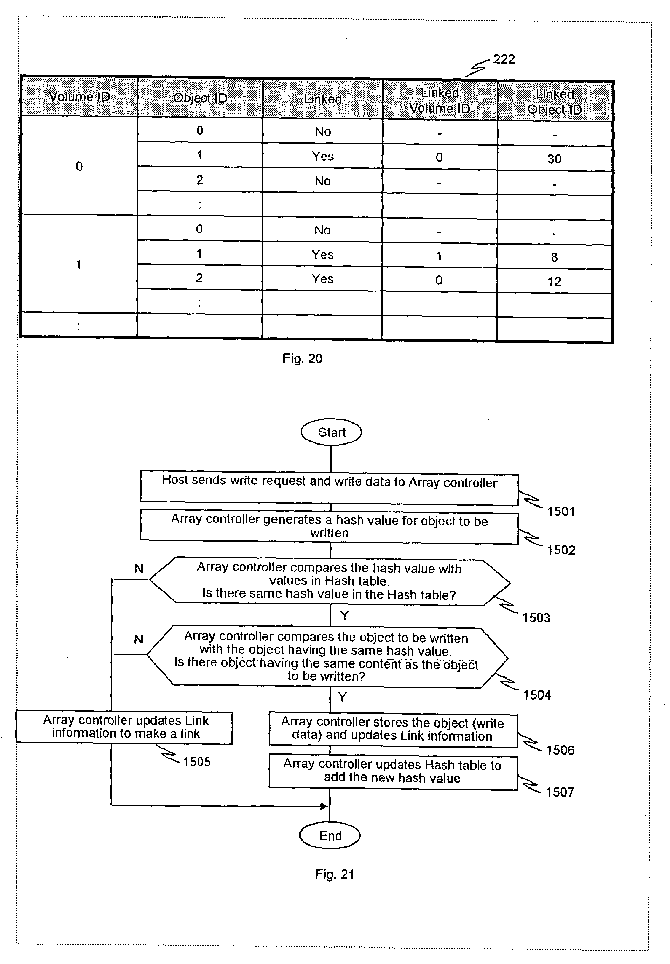

Figure 20 shows an example of Link information 222. This information maintains link between objects. Status of Linked is 'No' if the object is original and it has no link to other object. This information can be constructed as list or directory of each element for faster search. As shown in Figure 18, Backup Appliance 700 may access Data transfer volume 630 like the previous embodiment.

### C.3. Write process and Read process

Figure 21 describes a write process with deduplication.
➢ At step 1501, the Host 500 issues a write request and transfers write data (object) to the Array controller 110.
➢ At step 1502, the Array controller 110 generates a hash value for object to be written.
➢ At step 1503, the Array controller 110 compares the hash value with values in Hash Table 221. If there is same hash value in the Hash Table 221, the process proceeds to step 1504. If not the process proceeds to step 1505.
➢ At step 1504, the Array controller 110 compares the written object with the object having the same hash value. If there is object having same contents, the process proceeds to step 1506. If not, the process proceeds to step 1505.
➢ At step 1505, the Array controller 110 updates Link information 222 to make (add) a link to the same object instead of storing the object to be written.
➢ At step 1506, the Array controller 110 stores the object and updates Link information 222.
➢ At step 1507, the Array controller 110 updates Hash table 221 to add the new hash value.

In responding a read request from the Host 500, the Array controller 110 finds the object having same contents or the original object by referring the Link information 201. Then the Array controller 110 sends it to the Host 500.

### C.4. Backup process

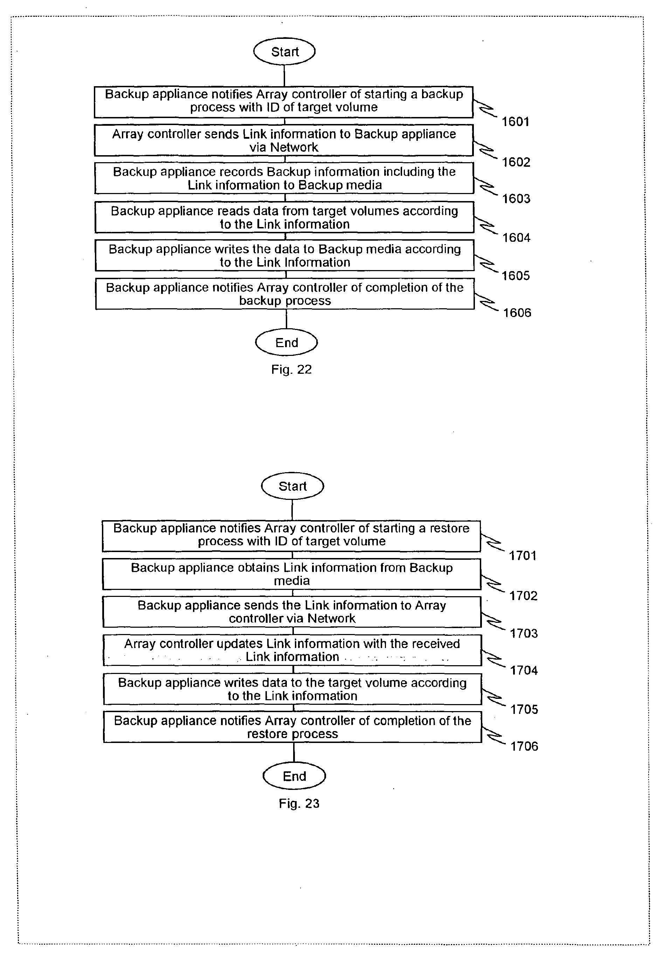

Figure 22 shows a backup process.
➢ At step 1601, the Backup appliance 700 notifies the Array controller 110 of staring a backup process via the Network 902 or the SAN 901. In this notification, the Array controller 110 indicates ID of Volume 640 as backup target.
➢ At step 1602, the Array controller 110 sends the Link information 222 to the Backup appliance 700 via the Network 902.
➢ At step 1603, the Backup appliance 700 records the backup information including the Link information 222 to Backup media 801 or 802.
➢ At step 1604, the Backup appliance 700 reads existing data (objects) from Volumes 640 according to the Link information 222. The backup appliance 700 gets just original objects and does not get objects that are replaced by link to other object.
➢ At step 1605, the Backup appliance 700 writes the data (objects) to the Backup media 801 or 802 according to the Link information 222.
➢ At step 1006, the Backup appliance 700 notifies the Array controller 110 of completion of the Backup process.

In the above backup process, just data (object) existing in real (not virtual) are processed, transferred and recorded as backup data. As another example of the backup process, like the previous embodiment, the Link information 222 may be transferred through Data transfer volume 630 instead of Network 920. The objects also may be transferred through Data transfer volume 630.

### C.5. Restore process

Figure 23 shows a Restore process.
➢ At step 1701, the Backup appliance 700 notifies the Array controller 110 of staring a restore process via the Network 902 or the SAN 901. In this notification, the Array controller 110 indicates ID of TPV as restore target.
➢ At step 1702, the Backup appliance 700 obtains the Link information 222 from the Backup media 801 or 802.
➢ At step 1703, the Backup appliance 700 sends the Link information 204 to the Array controller 110 via Network 902.
➢ At step 1704, the Array controller 110 updates Link information 222 with the received Link information 222.
➢ At step 1705, the Backup appliance 700 writes data (objects) to the target Volumes 640 according to the Link information 222. The Array controller 110 recreates Hash table 221.
➢ At step 1706, the Backup appliance notifies the Array controller 110 of completion of the restore process.

In the above restore process, just data existing in real (not virtual) are processed and transferred. As another example of the restore process, like the previous embodiment, the Link information 222 may be transferred through Data transfer volume 630 instead of Network 920. The objects also may be transferred through Data transfer volume 630.

### D. 4^{th} Embodiment

### D.1. System Configuration

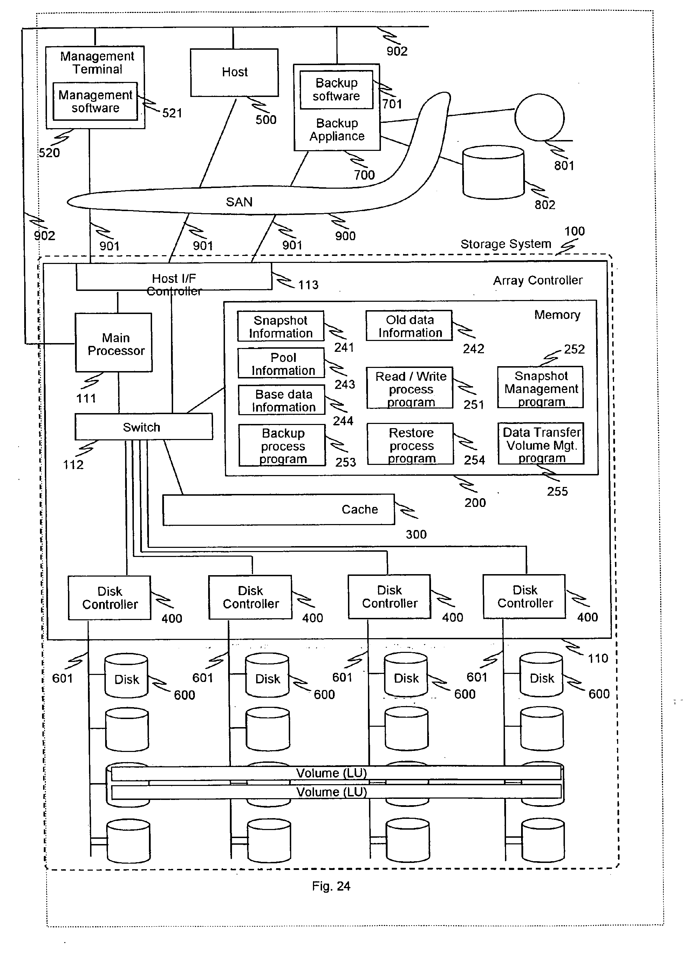

Figure 24 describes the system configuration of the 4^{th} embodiment. Except for contents of the Memory 200, the system configuration is same as the configuration described in the 1^{st} embodiment. In this embodiment, the following information and programs are stored in Memory 200. Main processor 111 and other components use these information and program to perform various processes described later.
241: Snapshot Information
242: Old data information
243: Pool information
231: Read / Write process program
232: Snapshot Management program
233: Backup process program
234: Restore process program
235: Data Transfer Volume management program

### D.2. Overview of snapshot by copy on write

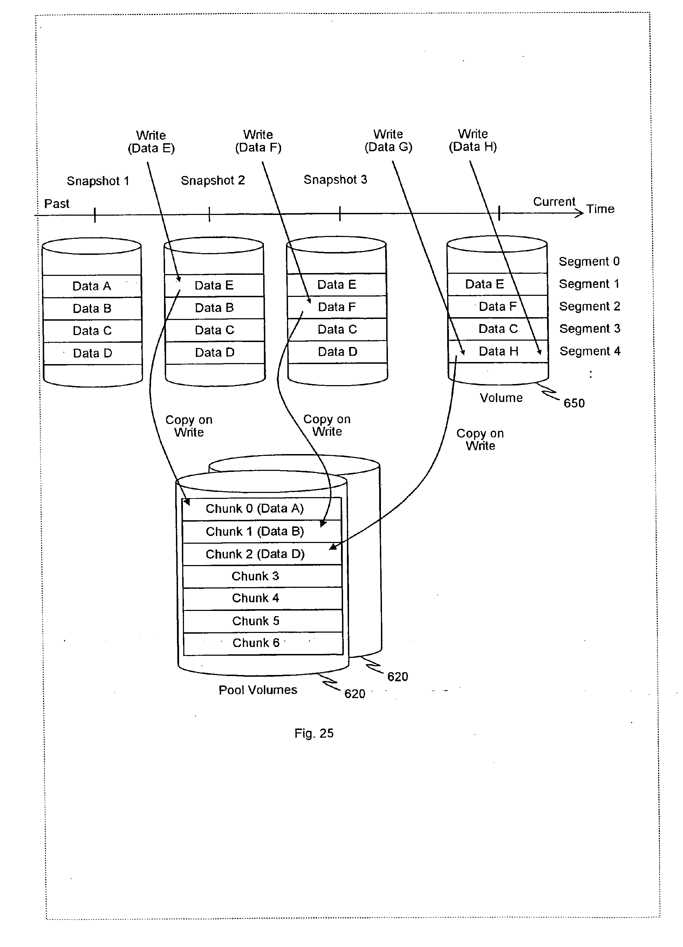

Figure 25 shows overview of snapshot by copy on write. The Storage system 100 provides Volumes 650 (i.e. storage area) for Host 500. Moreover, the Storage system 100 takes and provides snapshots for multiple generations (point in time) by copy on write. In this method, at the time of taking snapshot of in storage area is taken, the Storage system 100 does not copy the data. When a write access is performed to the area, the Storage system100 copies the data before the write (i.e. old data for the access) to chunks in the Pool volume 620. Then the Storage system 100 writes the new data to the target area. By maintaining and managing the old data, the Storage system 100 can provide the snapshot of the original area to Host 500 virtually.

For example, in figure 25, an old data A was copied and kept in Chunk 0 in Pool volume 620 when the data E was written. At current time, Data A, Data B and Data D are preserved in the Pool volumes 620, and each snapshot (snapshot 1, 2, or 3) can be reclaimed by using these old data in the Pool volumes 620 and current contents in the Volume 650 (most right one in this figure). To achieve above, the Array controller 110 uses Snapshot information 241, Old data information 242, Pool information 243 and Base data information 244.

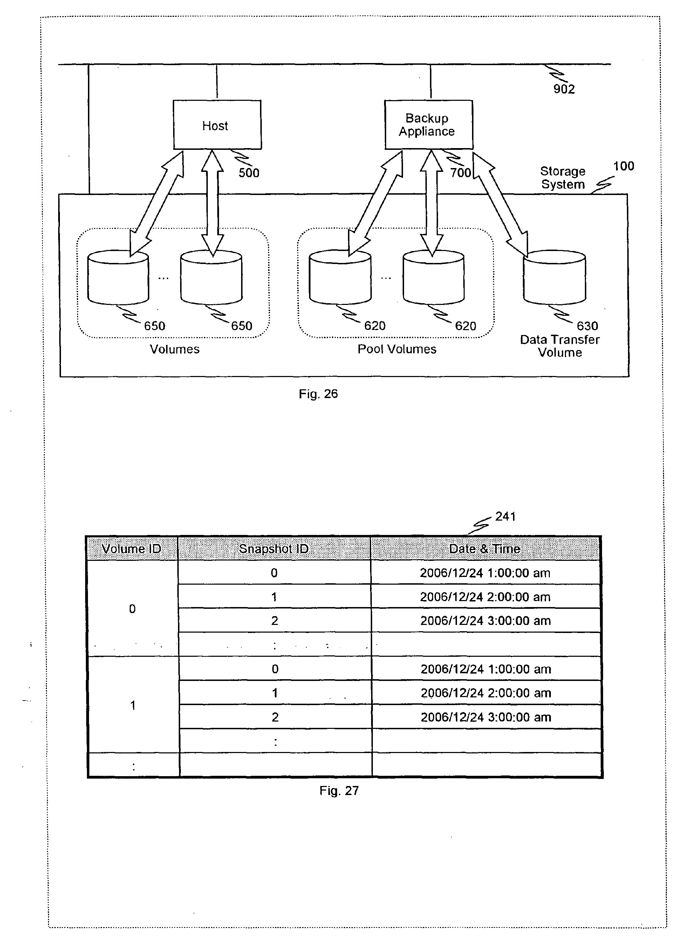

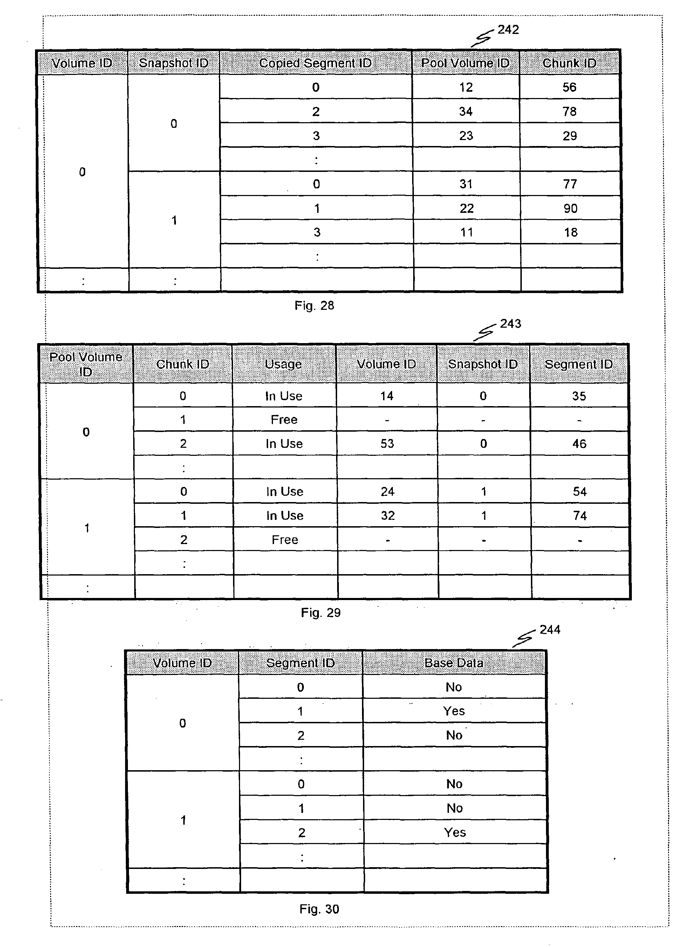

Figure 27 shows an example of Snapshot information 241 having information about each snapshot, such as date and time. The Management terminal 520 can instruct to take new snapshot to the Storage system 100. Figure 28 shows an example of Old data information 242. This information maintains relation among snapshot, original location (segment) and location of old data in the Pool volume 620. In this figure, the original location is specified by Segment ID and the current location of old data is specified by Pool volume ID and chunk ID. In other words, this information maintains mapping between a segment and a chunk. Figure 29 shows an example of Pool information 243. Contents and usage of this information are almost same as the ones described in the 1^{st} embodiment. Figure 30 shows an example of Base data information 244. This information indicates whether each segment experiences copying old data (i.e. occurrence of write) or not. The usage of this information is described below. As shown in Figure 26, the Backup appliance 700 accesses to Pool volume 620 and Data Transfer volume 630 via SAN 901. Host 500 also accesses to Volume 650 via SAN 901.

### D.3. Write process

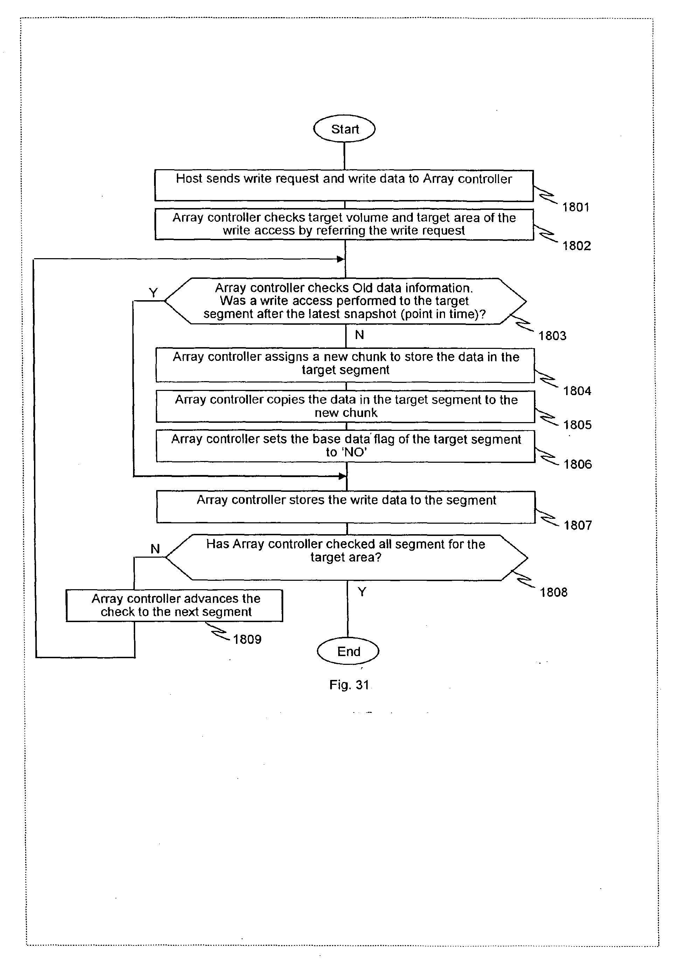

Figure 31 describes a write process.
➢ At step 1801, the Host 500 issues a write request and transfers write data to the Array controller 110.
➢ At step 1802, the Array controller 110 checks target volume and target area of the write access by referring the write request.
➢ At step 1803, the Array controller 110 checks Old data information 242. If other write access occurred in target segment after the latest snapshot (point in time), the process proceeds to 1807. If not, the process proceeds to step 1804.
➢ At step 1804, the Array controller 110 assigns a new chunk to store the old data. To do this, the Array controller 110 updates the Old data information 242 and the Pool information 243.
➢ At step 1805, the Array controller 110 copies the data in the target segment to the new chunk.
➢ At step 1806, the Array controller 110 sets the "base data flag" of the target segment to 'No'. The initial value of this flag is 'Yes'.
➢ At step 1807, the Array controller 110 stores the write data to the segment (i.e. area in the Volume 650).
➢ At step 1808, if the Array controller 110 has checked all segments of the target area, the process ends. If not, the Array controller 110 advances the check to the next segment (step 1809).

### D.4. Read process for snapshot

In responding a read request for one snapshot from the Host 500, by referring the Snapshot information 241, the Old data information 242 and the Base data information 244, the Array controller 110 finds the chunk having old data that is needed to reclaim the specified snapshot and the segment storing data that is needed to reclaim the specified snapshot. Then the Array controller 110 sends the required data to Host 500.

### D.5. Backup process for multiple generations of snapshot

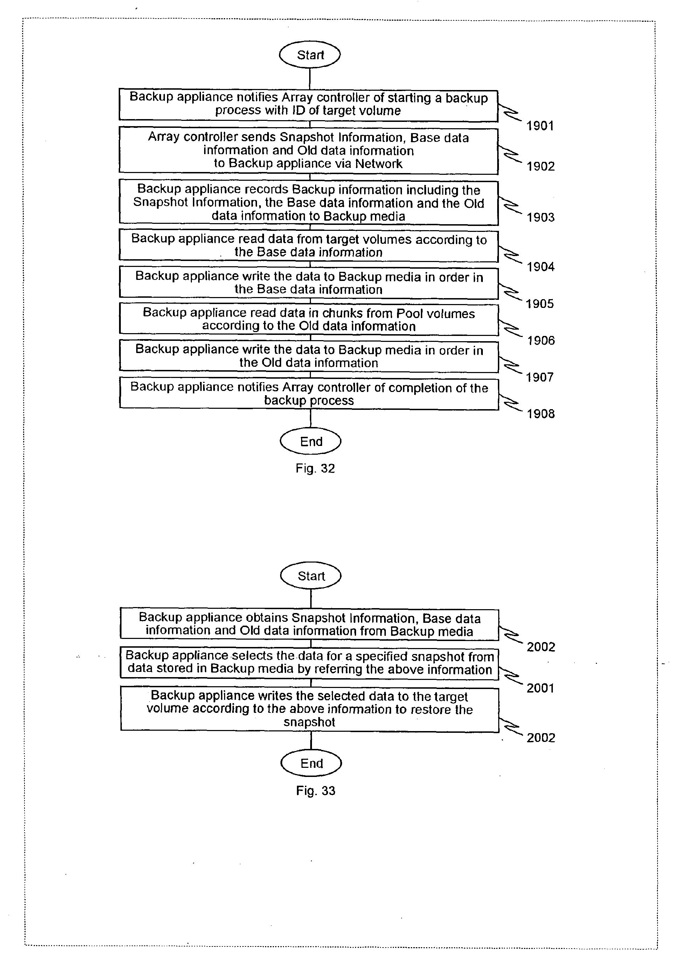

Figure 32 shows a backup process for multiple generations of snapshot.
➢ At step 1901, the Backup appliance 700 notifies the Array controller 110 of staring a backup process via the Network 902 or the SAN 901. In this notification, the Array controller 110 indicates ID of Volume 650 as backup target.
➢ At step 1902, the Array controller 110 sends the Snapshot information 241, the Old data information 242 and the Base data information 244 to the Backup appliance 700 via the Network 902.
➢ At step 1903, the Backup appliance 700 records the backup information including the Snapshot information 241, the Old data information 242 and the Base data information 244 to Backup media 801 or 802.
➢ At step 1904, the Backup appliance 700 reads data from Volumes 650 according to the Base data information 244.
➢ At step 1905, the Backup appliance 700 writes the data to the Backup media 801 or 802 in order in the Base data information 244.
➢ At step 1906, the Backup appliance 700 reads data from Pool volumes 620 according to the Old data information 242.
➢ At step 1907, the Backup appliance 700 writes the data to the Backup media 801 or 802 in order in the Old data information 242.
➢ At step 1908, the Backup appliance 700 notifies the Array controller 110 of completion of the Backup process.

In the above backup process, difference data between snapshots are processed, transferred and recorded as backup data. Whole data in virtual volumes of multiple snapshots do not need to be processed, transferred and recorded. As another example of the backup process, like the previous embodiment, the Snapshot information 241, the Old data information 242 and the Base data information 244 may be transferred through Data transfer volume 630 instead of Network 920. The backup data also may be transferred through Data transfer volume 630.

### D.6. Restore process for one snapshot

Figure 33 shows a restore process for one snapshot.
➢ At step 2001, the Backup appliance 700 obtains the Snapshot information 241, the Old data information 242 and the Base data information 244 from the Backup media 801 or 802.
➢ At step 2002, the Backup appliance 700 selects the data for a specified snapshot from data stored in the Backup media 801 or 802 by referring the Snapshot information 241, the Old data information 242 and the Base data information 244.
➢ At step 2003, the Backup appliance 700 writes the selected data to the target volume according to the Snapshot information 241, the Old data information 242 and the Base data information 244.

### D.7. Restore process for multiple generations of snapshot

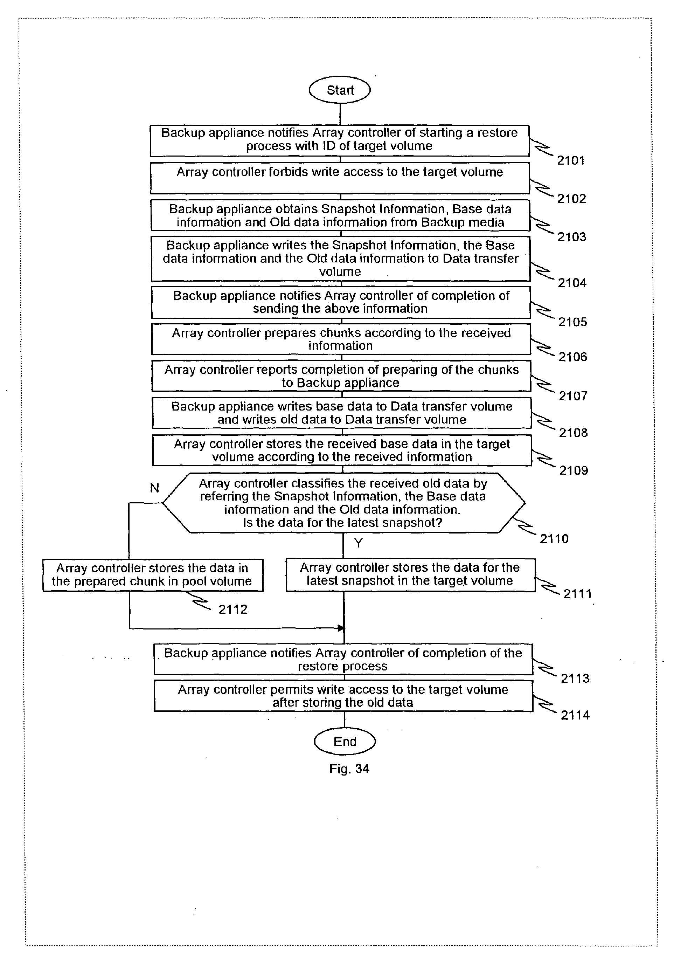

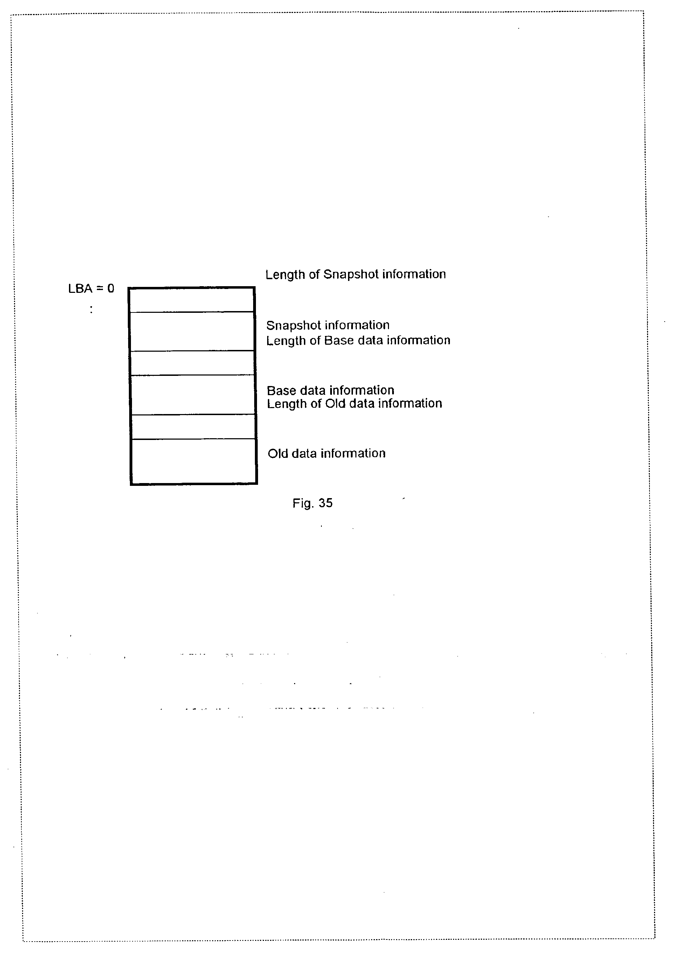

Figure 34 shows a restore process for multiple generations of snapshot.
➢ At step 2101, the Backup appliance 700 notifies the Array controller 110 of staring a restore process via the Network 902 or the SAN 901. In this notification, the Array controller 110 indicates ID of Volume 650 as restore target.
➢ At step 2102, the Array controller 110 forbids write access to the target Volume 650. That is, the Array controller 110 starts to reject write access to the target Volume 650.
➢ At step 2103, the Backup appliance 700 obtains the Snapshot information 241, the Old data information 242 and the Base data information 244 from the Backup media 801 or 802.
➢ At step 2104, the Backup appliance writes the Snapshot information 241, the Old data information 242 and the Base data information 244 to the Data transfer volume 630 with the format shown in Figure 35. In this format, each part to store the length of information is fixed-length part like a format described in Figure 13. In this step, the Old data information to be written may have only volume ID, snapshot ID and Copied segment ID.
➢ At step 2105, the Backup appliance notifies the Array controller 110 of completion of sending the Snapshot information 241, the Old data information 242 and the Base data information 244.
➢ At step 2106, the Array controller 110 prepares chunks according to the received information. In this preparation, the Array controller 110 updates the Snapshot information 241, the Old data information 242, the Pool information 243 and the Base data information 244 in Memory 200.
➢ At step 2107, the Array controller 110 reports completion of preparing the chunks to the Backup appliance 700.
➢ At step 2108, the Backup appliance 700 obtains the base data and the old data from the Backup media 801 or 802. Then the Backup appliance 700 writes the base data to the Data transfer volume 630 in order in the Base data information 244 and writes the old data to the Data transfer volume 630 in order in the Old data information 242 sequentially.
➢ At step 2109, the Array controller 110 stores the received base data in the target Volume 650 according to the received Base data Information 244.
➢ At step 2110, the Array controller 110 classifies the received old data by referring the Snapshot information 241 and the Old data information 242. For the old data that is for the latest snapshot, step 2111 is performed. For the old data that is not for the latest snapshot, step 2112 is performed.
➢ At step 2111, the Array controller 110 stores the old data in original segment in the target Volume 650 according the received Old data information 242.
➢ At step 2112, the Array controller 110 stores the old data in chunk in the Pool volume 620 according the received Old data information 242.
➢ At step 2113, the Backup appliance notifies the Array controller 110 of completion of the restore process.
➢ At step 2114, the Array controller permits write access to the target Volume 650 after storing the old data mentioned in the above steps.

In the above restore process, difference data between snapshots are processed and transferred. As another example of the restore process, the Snapshot information 241, the Old data information 242 and the Base data information 244 may be transferred via Network 920. The old data and the base data also may be transferred via Network 920.

As can be understood from the disclosure provided herein, according to embodiments of the invention, information about management of virtualization (i.e. mapping between physical and logical) is provide by a storage system to a backup appliance (or common computer). The backup appliance uses the information to recognize the mapping and to perform backup and restore process based on the mapping. Therefore the backup appliance handles only physical (really existing) area to perform backup and restore rather than virtual ones. This invention realizes reducing the amount of data to be transferred and backed up.

Finally, it should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. For example, the described methods and systems may be implemented in a wide variety of programming or scripting languages, such as Assembler, C/C++, perl, shell, PHP, Java, etc.

The present invention has been described in relation to particular examples, which are intended in all respects to be illustrative rather than restrictive. Those skilled in the art will appreciate that many different combinations of hardware, software, and firmware will be suitable for practicing the present invention. Moreover, other implementations of the invention will be apparent to those skilled in the art from consideration of the specification and practice of the invention disclosed herein. Various aspects and/or components of the described embodiments may be used singly or in any combination in the plasma chamber arts. It is intended that the specification and examples be considered as exemplary only, with a true scope and spirit of the invention being indicated by the following claims.

## Claims

1. A method for managing a backup system coupled to a storage system, said storage system communicating with a plurality of host computers, the method comprising;
operating the storage system to provide thin provisioned volumes (TPV) to the host computers;
maintaining mapping information of physical volumes assigned to the thin provisioned volumes;
providing the mapping information to the backup storage system;
operating the backup system to perform backup of only physical volumes assigned to the thin provisioned volumes, according to the mapping information.

2. The method of claim 1, wherein the mapping information comprises mapping between physical area, physical data and physical objects to corresponding logical area, logical data, and logical objects, respectively.

3. The method of claim 2, further comprising storing the mapping information in the backup system and, upon initiating restore operation, restoring the physical volumes according to the mapping information.

4. The method of claim 3, further comprising upon initiating a restore operation, sending the mapping information from the backup system to the storage system and comparing the mapping information from the backup system to the mapping information from the storage system and:
- if no discrepancies are found, proceeding with the restore process;
- if discrepancies are found, determining whether they are only addition of new chunks to the mapping information from the backup system and, if so, proceeding with the restore process;
- otherwise, aborting the restore process.

5. The method of any one of claims 1 to 4, further comprising:
sending a backup notification from the backup system to the storage system to initiate backup process;
upon receiving the backup notification at the storage system, sending the mapping information to the backup storage system; and,
upon receiving the mapping information, storing the mapping information in the backup storage system.

6. The method of any one of claims 1 to 5, further comprising:
upon receiving a write request from one of the host computers to a target TPV, querying the mapping information to identify assigned chunk in the physical volume corresponding to the target TPV;
checking whether the target TPV is under a backup process and, if yes, assigning a new chunk to the target TPV and performing the write request on the new chunk; otherwise, performing the write request on the assigned chunk.

7. The method of any one of claims 1 to 6, wherein transfer of data for backup and restore operation between the backup system and the storage system if performed via a data transfer volume.

8. The method of claim 7, wherein the data transfer volume comprise a virtual volume.

9. The method of any one of claims1 to 8, further comprising:
maintaining a link table comprising link to multiple identical items according to deduplication procedure;
providing the link table to the backup storage system;
operating the backup system to perform backup of only single instance of multiple identical items identified in the link table.

10. The method of claim 9, further comprising:
storing the link table in the backup storage system;
upon initiation of restore operation, sending the link table from the backup system to the storage system; and,
restoring only single instance of multiple identical items identified in the link table.

11. The method of any one of claims 1 to 10, further comprising:
maintaining snapshot information in the storage system, the snapshot information maintaining a log of data stored as base data and data stored as old data, so as to enable constructing a snapshot of data at given moment in time;
maintaining base data information in the storage system, the base data information maintaining a log of base data stored in physical volume as base data;
maintaining old data information in the storage system, the old data information maintaining a log of old data stored in physical volume as base data;
upon initiation of backup by the backup system, sending to the backup system the snapshot information, the base data information and the old data information;
operating the backup system to back up the base data and the old data according to the snapshot information, the base data information and the old data information.

12. The method of any one of claims 1 to 11, further comprising:
upon initiating a restore operation:
the backup system writes the snapshot information, the base data information and the old data information to a transfer volume;
the storage system prepares storage space according to the snapshot information, the base data information and the old data information;
the backup system copies the base data and old data onto the transfer volume in sequence;
the storage system reads the base data and old data onto from the transfer volume and writes the base data and old data onto the prepared storage space is sequence.

13. A method for managing a backup system and a storage system coupled to at least one host computer and having a physical storage facility, comprising:
dividing the physical storage facility into a plurality of chunks;
defining a plurality of virtual storage volumes;
assigning virtual storage volumes to applications operating in the host computer;
allocating selected chunks to each virtual storage volume;
maintaining a mapping of the allocation of selected chunks to virtual storage volumes;
maintaining an index for each allocated chunk to indicate whether the allocated chunk is empty or has been written to;
upon backup request, performing back up only for chunks for which the index indicates that data has been written to.

14. The method of claim 13, further comprising: upon initiating restore operation by the backup system, transmitting the index to the storage system.

15. The method of claim 14, further comprising: upon initiating restore operation by the backup system, transmitting the mapping to the storage system.

16. The method of claim 15, further comprising:
comparing the mapping information from the backup system to the mapping information from the storage system and:
- if no discrepancies are found, proceeding with the restore process;
- if discrepancies are found, determining whether they are only addition of new chunks to the mapping information from the backup system and, if so, proceeding with the restore process;
- otherwise, aborting the restore process.

17. The method of any one of claims 13 to 16, further comprising:
establishing a transfer volume; and,
wherein performing back up comprises operating the storage system to write chunks for which the index indicates that data has been written to onto the transfer volume and subsequently operating the backup system to copy the chunks for which the index indicates that data has been written to from the transfer volume onto a backup volume.

18. The method of claim 17, further comprising:
upon initiating a restore operation:
backup system stores the mapping information in the transfer volume;
storage system reads the mapping information from the transfer volume and prepare storage chunks according to the mapping information;
backup system writes backed up data for restoring onto the transfer volume; and,
storage system copies the backed up data from the transfer volume onto the storage chunks.

19. A storage system coupled to at least one host computer, the storage system comprising:
a plurality of storage discs, each disk defining a plurality of physical chunks;
at least one disk controller operative to control assigned storage discs;
a thin provisioning module assigning virtual volumes to applications operating in the host computer, and assigning physical chunks to the virtual volumes as needed;
a mapping module maintaining mapping information of physical chunks assigned to the virtual volumes and maintaining an index for each physical chunk to indicate whether the chunk is empty or has been written to.

20. The storage system of claim 19, further comprising a backup module, the backup module responsive to, upon receiving a backup initiation notification from a backup system, transmit the mapping information to the backup system.
